**Europäisches Patentamt**

**European Patent Office**

**Office européen des brevets**

(19)

(11) Veröffentlichungsnummer: **0 090 941**
**B1**

(12)

# EUROPÄISCHE PATENTSCHRIFT

(45) Veröffentlichungstag der Patentschrift:
23.09.87

(21) Anmeldenummer: 83101802.3

(22) Anmeldetag: 24.02.83

(51) Int. Cl.⁴: **F 16 K 37/00,** F 16 K 17/30

(54) Schlauchbruchsicherung für Fluide, insbesondere für Gasanlagen.

(30) Priorität: 03.04.82 DE 8209703 U

(43) Veröffentlichungstag der Anmeldung:
12.10.83 Patentblatt 83/41

(45) Bekanntmachung des Hinweises auf die Patenterteilung:
23.09.87 Patentblatt 87/39

(84) Benannte Vertragsstaaten:
AT BE CH DE FR GB IT LI LU NL SE

(56) Entgegenhaltungen:
DE-B-2 552 426
DE-U-1 950 920
DE-U-8 135 554
FR-A-2 408 151
US-A-3 379 206
US-A-4 373 548

(73) Patentinhaber: J. Lorch Ges. & Co. KG,
Bahnhofstrasse 22, D-7035 Waldenbuch (DE)

(72) Erfinder: Rauschenberger, Adolf, Karl- Benz-
Strasse 34, D-7405 Dettenhausen (DE)
Erfinder: Schäfer, Hans- Dieter, Spessartweg 8,
D-7024 Filderstadt 4 (DE)

(74) Vertreter: Dreiss, Uwe, Dr. jur. Dipl.- Ing. M.Sc.,
Patentanwälte Dreiss, Hosenthien & Fuhlendorf
Gerokstrasse 6, D-7000 Stuttgart 1 (DE)

EP 0 090 941 B1

## Beschreibung

Die Erfindung betrifft eine Schlauchbruchsicherung für Fluide wie Brenngas und Wasser, insbesondere aber für Gasanlagen, mit einem einen Drosselkanal aufweisenden, entgegen der Wirkung einer Feder beim Überschreiten einer bestimmten Druckdifferenz gegen einen Ventilsitz in einem Gehäuse verschiebbar geführten Ventilkörper und mit einer von außen von Hand betätigbaren Entriegelung zum Abheben des Ventilkörpers von seinem Ventilsitz. Eine solche Schlauchbruchsicherung ist aus der DE-B- 2 552 426 bekannt.

Bei bekannten solchen Schlauchbruchsicherungen ist Dicht erkennbar, ob beispielsweise durch zu rasches Öffnen des Gasventils die Sicherung angesprochen und der Schlauchanschluß gesperrt ist oder nicht. Dies kann dann erst bei der Inbetriebnahme des Gasbrenners od.dgl. festgestellt werden. Die Arbeit kann dann erst nach Lösen der Abschaltung aufgenommen werden. Damit geht aber produktive Arbeitszeit verloren, da der manchmal schlecht zugängliche Arbeitsplatz zum Lösen der Sperre wieder verlassen werden muß, beispielsweise bei Lötarbeiten in schlecht zugänglichen Behältern od.dgl.

Aufgabe der vorliegenden Erfindung ist es, die bekannten Schlauchsicherungen der eingangs genannten Art so zu verbessern, daß der Sperrzustand optisch leicht erkennbar ist.

Die Erfindung, wie sie in dem Anspruch 1 gekennzeichnet ist, löst diese Aufgabe. Beim Oberschreiten der bestimmten Druckdifferenz ist durch den Ventilkörper eine Auslöse-Sichtanzeige von einer Ruhestellung in eine Anzeigestellung bringbar und wird in dieser Anzeigestellung gehalten. Hierdurch wird optisch sofort das Ansprechen der Schlauchbruchsicherung erkennbar und es kann die Sperre vor der Arbeitsaufnahme ohne zusätzlichen Weg aufgehoben werden. Nach den Vorschriften DIN 30 693 darf eine solche Aufhebung der Sperre der Schlauchbruchsicherung nur von Hand erfolgen können.

Besonders vorteilhaft kann die Auslöseanzeige durch eine Feder kraftschlüssig in ihrer Anzeigestellung gehalten sein und diese Anzeigestellung kann dann nur durch gleichzeitige Lösung der Sperre von Hand rückgängig gemacht werden.

Konstruktiv besonders einfach kann die Auslöseanzeige durch den höheren Betriebsdruck im Gehäuse und den niedrigeren Außendruck gegen die Wirkung der mit ihr zusammenwirkenden Feder in der Ruhestellung gehalten sein. Hierzu kann im Gehäuse ein die Auslöseanzeige betätigender Kolben verschiebbar geführt sein, dessen eine Seite mit dem Außendruck der Atomsphäre und dessen andere Seite mit dem Betriebsdruck im Gehäuse beaufschlagbar ist. Damit wird durch den höheren Betriebsdruck selbst ohne wesentlichen zusätzlichen Maßnahmen die Auslöseanzeigen in ihrer Ruhestellung gehalten. Reibungsstörungen bei rationeller Herstellung können dadurch vermieden werden, daß der Kolben mit dem Vertilkörper axial fluchtende im Gehäuse angeordnet ist. Dabei kann besonders vorteilhaft der Kolben über eine in einer Führung dicht geführten Kolbenstange mit einem die Auslöseanzeige abgebenden Druckknopf verbunden sein, über den gegen die Wirkung der Feder der Ventilkörper von seinem Ventilsitz zur Aufhebung der Absperrung abhebbar ist.

Der Kolben kann sicher in seiner Ruhestellung gehalten werden, wenn der Raum zwischen ihm und der Führung mit dem Arbeitsdruck des Schlauchanschlusses über einen Verbindungskanal verbunden ist. Ebenso kann die dem Ventilkörper zugekehrte Seite des Kolbens über einen Axialkanal durch den Kolben und die Kolbenstange mit der freien Atmosphäre verbunden sein, so daß eine Seite des Kolbens stets druckentlastet ist. Durch eine zwischen der Führung und dem Druckknopf angeordnete Feder kann dann die Auslöseanzeige nach dem Auslösen in der Auslösestellung gehalten sein und an einer selbsttätigen Zurückstellung verhindert werden. Vorteilhaft kann der Druckknopf napfförmig ausgebildet sein, wobei seine zylindrische eine gut sichtbare Warnfarbe tragende Seitenwand in der Ruhestellung vom Gehäuse verdeckt und in seiner Anzeigestellung aus dem Gehäuse herausragend sichtbar sein.

Um die Sicherung gegen Fluchtungsfehler möglichst unempfindlich zu machen, kann zwischen dem Kolben und dem Ventilkörper ein im Gehäuse axial verschiebbar aber dicht geführter Druckbolzen vorgesehen sein. Dabei kann der Druckbolzen gegen eine sich am Ventilsitz abstützende Feder zum Abheben des Ventilkörpers von seinem Sitz durch den Kolben über den Druckknopf verschiebbar sein.

Herstellungsmäßig einfach kann im Gehäuse eine mehrfach abgestufte Bohrung mit Abstufungen für den Druckknopf die Führungsschraube den Kolben und die weitere Führungsschraube vorgesehen sein.

Weitere erfindungsgemäße Ausbildungen sind den Unteransprüchen zu entnehmen und werden mit ihren Vorteilen in der nachstehenden Beschreibung näher erläutert. In der einzigen beigefügten Zeichnung ist ein Ausführungsbeispiel einer Schlauchbruchsicherung im Schnitt dargestellt.

In einem Gehäuse 1 ist ein Einschraubnippel 2 mit einer Überwurfmutter 3 zum Anschluß der dargestellten Schlauchbruchsicherung an einen Druckregler einer Gasquelle eingeschräubt. In einer mehrfach abgestuften Bohrung 4 ist auf der Druckreglerseite ein napfförmiger Ventilkörper 5 eingesetzt, der mit einem Ventilsitz 6 zusammenwirkt. Dazu ist der Ventilkörper 5 mit einen Drosselkanal 7 bildenden Durchbrüchen 8 versehen. Bei einem unzulässig hohen Gasdurchsatz, beispielsweise bei einem Schlauchbruch entsteht eine Druckdifferenz vor und nach dem Ventilkörper 5, durch die dieser gegen die Wirkung einer Feder 9 auf den Ventilsitz 6 verschoben und so der Gasdurchgang verschlossen wird. Die Gasdurchströmrichtung ist durch Pfeile 10 dargestellt. Am Gehäuse 1 ist im Winkel zur Bohrung 4 nach dem Ventilsitz 6 ein Schlauchanschluß 11 angeordnet.

Fluchtend zum Ventilkörper 5 ist in der abgestuften Bohrung 4 eine Auslöseanzeige 12 angeordnet. Diese weist einen mindestens teilweise vom Gehäuse abgedeckten napfförmigen Druckknopf 13 auf, der auf einer Kolbenstange 14 gehalten ist. Die Kolbenstange 14 selbst ist dicht in einer Führungsschraube 15 verschiebbar geführt und trägt dem Druckknopf 13 gegenüberliegend einen Kolben 16, der dicht in der abgestuften Bohrung 4 verschiebbar geführt ist. Zwischen dem Druckknopf 13 und der Führungsschraube 15 ist eine Feder 17 angeordnet, durch die der mit dem Kolben 16 verbundene Druckknopf 13 aus dem Gehäuse 1 herausgeschoben werden kann, wie dies anschließend beschrieben wird. Auf der Außenseite des napfförmigen Druckknopfs 13 ist eine Farbmarkierung 18 vorgesehen, die in der Ruhestellung der Auslöseanzeige 12 durch das Gehäuse 1 verdeckt und in der Anzeigestellung sichtbar ist.

Zwischen dem Kolben 16 und dem Ventilkörper 5 ist eine weitere Führungsschraube 19 dicht im Gehäuse 1 eingesetzt und in ihr ist ein Druckbolzen 20 axial verschiebbar aber dicht geführt. Der Druckbolzen 20 weist einen Bund 21 auf. Zwischen dem Bund 21 und dem Ventilsitz 6 ist eine Feder 22 angeordnet, durch die der Druckbolzen 20 gegen die weitere Führungsschraube 19 hin verschoben gehalten ist.

Der Raum 28 zwischen der weiteren Führungsschraube 19 und dem Kolben 16 ist über einen Axialkanal 23, der durch den Kolben 16 und die Kolbenstange 14 hindurchgeführt ist, mit der freien Atmosphäre verbunden. Im Ausführungsbeispiel ist im Bereich des Druckknopfs 13, der über eine Schraube 24 gehalten ist, der Axialkanal 23 durch eine Querbohrung 25 durchgeführt.

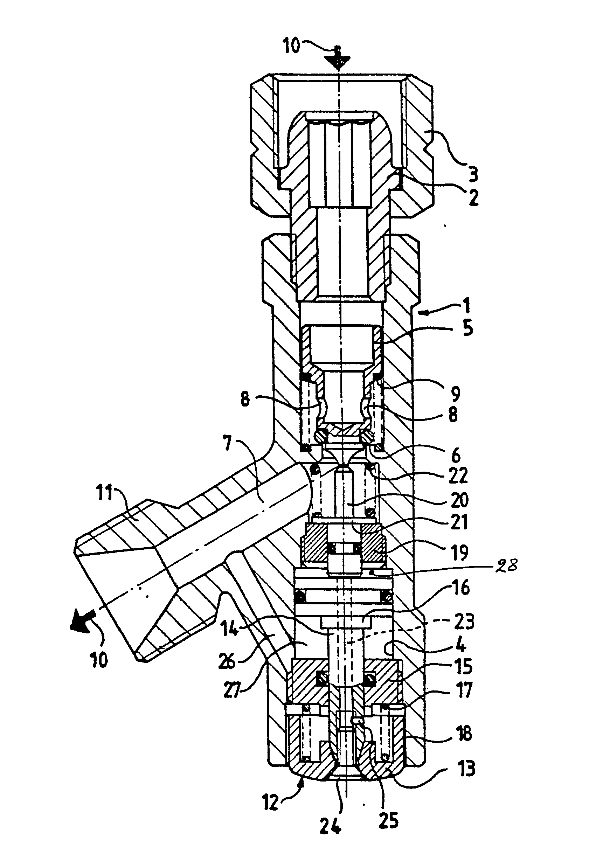

Der Raum 27 zwischen dem Kolben 16 und der Führungsschraube 15 ist über einen Verbindungskanal 26 mit dem Schlauchanschluß 11 in Verbindung, so daß bei einem im Schlauchanschluß 11 vorhandenen Arbeitsdruck dieser auch im Raum 27 zwischen dem Kolben 16 und der Führungsschraube 15 herrscht. Durch diesen Druck der größer als der Atmosphärendruck ist, wird der Kolben 16 gegen die weitere Führungsschraube 15 gedrückt und damit wird auch der Druckbolzen 20 in Richtung zum Ventilsitz 6 hin verschoben. Bei geöffnetem Ventilkörper 5 ragt also das Ende des Druckbolzens 20 etwas in den Ventilsitz 6 hinein. Fällt der Arbeitsdruck im Schlauchanschluß 11 durch Platzen oder Lösen des Schlauchs ab, so wird durch den Gasdruck und die Druckdrosselung im Drosselkanal 7, 8 der Ventilkörper 5 gegen den Ventilsitz 6 gedrückt und damit wird der Druckbolzen 20 verschoben. Durch das Schließen des Ventilsitzes 6 fällt der Druck im Schlauchanschluß 11 weiter ab und damit auch im Raum 27. Damit wird durch die Feder 17 der Druckknopf 13 mit dem Kolben 16 weiter nach außen aus dem Gehäuse 1 heraus verschoben und es wird die Farbmarkierung 18 sichtbar. Die Auslöseanzeige 12 ist in ihre Anzeigestellung gelangt. Erst durch ein Eindrücken des Druckknopfes 13 von Hand kann diese Anzeigestellung bei gleichzeitigem Abheben des Ventilkörpers 5 von seinem Ventilsitz 6 aufgehoben werden, wobei dann auch die Schlauchbruchsicherung wieder für ein Weiterarbeiten durchgängig gemacht wird. Zur Abdichtung können, wie aus der Figur ersichtlich, in entsprechenden Einstichen Rundschnurdichtungen eingesetzt sein, um ein Austreten von Gas sicher zu vermeiden.

Um ein besonders leicht Ansprechen zu erreichen, kann anstelle des Kolbens 16 auch eine Membrane mit einem entsprechende Membranteller eingebaut sein.

**Patentansprüche**

1. Schlauchbruchsicherung für Fluide, insbesondere für Gasanlagen, mit einem einen Drosselkanal (8) aufweisenden entgegen der Wirkung einer Feder (9) beim Überschreiten einer bestimmten Druckdifferenz gegen einen Ventilsitz (6) in einem Gehäuse (1) verschiebbar geführten Ventilkörper (5) und mit einer von außen von Hand betätigbaren Entriegelung (13) zum Abheben des Ventilkörpers (5) von seinem Ventilsitz (6), dadurch gekennzeichnet, daß beim Überschreiten der bestimmten Druckdifferenz durch den Ventilkörper (5) eine Auslöseanzeige (12) von ihrer Ruhestellung in eine Anzeigestellung bringbar und in dieser Anzeigestellung gehalten ist, daß hierzu die Auslöseanzeige (12), der Kolben (16) mit dem Ventilkörper (5) axial fluchtend im Gehäuse (1) angeordnet sind, daß eine Seite des Kolbens (16) mit dem Außendruck der Atmosphäre und seine andere Seite mit dem Betriebsdruck im Gehäuse (1) beaufschlagt ist, daß der Kolben (16) über eine in einer Führung dicht geführten Kolbenstange (14) mit einem die Auslöseanzeige (12) abgebenden Druckknopf (13) verbunden ist, über den gegen die Wirkung der Feder (9) und dem anstehenden Betriebsdruck der Ventilkörper (5) von seinem Ventilsitz (6) abhebbar ist, wobei der Raum (27) zwischen dem Kolben (16) und der Führung (15) mit dem Arbeitsdruck des Schlauchanschlusses (11) über einen Verbindungskanal (26) beaufschlagt ist und die dem Ventilkörper (5) zugekehrte Seite des Kolbens (16) über einen Axialkanal (23) durch den Kolben (16) und die Kolbenstange (14) mit der Atmosphäre verbunden ist und daß der Schlauchanschluß (11) in einem Winkel zur Bewegungsachse des Kolbens (16) und des Ventilkörpers (5) angeordnet ist, oder der Schlauchanschluß (11) axial und die Auslöseanzeige (12) in einem Winkel angeordnet ist.

2. Schlauchbruchsicherung nach Anspruch 1, dadurch gekennzeichnet, daß die Auslöseanzeige (12) durch eine Feder (17) kraftschlüssig in ihrer Anzeigestellung gehalten ist.

3. Schlauchbruchsicherung nach Anspruch 1 oder 2, dadurch gekennzeichnet, daß die Auslöseanzeige (12) durch den höheren Betriebsdruck im Gehäuse (1) und dem niedrigeren Außendruck gegen die Wirkung der mit ihr zusammenwirkenden Feder (17) in ihrer Ruhestellung gehalten ist.

4. Schlauchbruchsicherung nach Anspruch 1, dadurch gekennzeichnet, daß die Führung durch eine im Gehäuse (1) dicht eingesetzte Führungsschraube (15) gebildet ist.

5. Schlauchbruchsicherung nach Anspruch 1 und 2, dadurch gekennzeichnet, daß die Feder (17) zwischen der Führung (Führungsschraube 15) und dem Druckknopf (13) angeordnet ist.

6. Schlauchbruchsicherung nach Anspruch 1, dadurch gekennzeichnet, daß der Druckknopf (13) napfförmig ausgebildet ist und seine zylindrische, eine gut sichtbare Warnfarbe tragende Seitenwand in der Ruhestellung vom Gehäuse (1) verdeckt und in seiner Anzeigestellung aus dem Gehäuse (1) herausragend sichtbar ist.

7. Schlauchbruchsicherung nach einem der Ansprüche 1 bis 6, dadurch gekennzeichnet, daß zwischen dem Kolben (16) und dem Ventilkörper (5) ein im Gehäuse axial verschiebbar aber dicht geführter Druckbolzen (20) vorgesehen ist.

8. Schlauchbruchsicherung nach Anspruch 7, dadurch gekennzeichnet, daß der Druckbolzen (20) gegen eine sich am Ventilsitz (6) abstützende Feder (22) zum Abheben des Ventilkörpers (5) von seinem Ventilsitz (6) durch den Kolben (16) und den Druckknopf (13) verschiebbar ist.

9. Schlauchbruchsicherung nach Anspruch 8, dadurch gekennzeichnet, daß der Hub des Druckbolzens (20) durch einen Bund (21), auf dem sich die Feder (22) abstützt, begrenzt ist.

10. Schlauchbruchsicherung nach Anspruch 8 und 9, dadurch gekennzeichnet, daß der Druckbolzen (20) in einer im Gehäuse (1) angeordneten weiteren Führungsschraube (19) axial verschiebbar geführt ist.

11. Schlauchbruchsicherung nach einem der Ansprüche 1 bis 10, dadurch gekennzeichnet, daß im Gehäuse (1) eine mehrfach abgestufte Bohrung (4) mit Abstufungen für den Druckknopf (13), die Führungsschraube (15), den Kolben (16) und die weitere Führungsschraube (19) vorgesehen ist.

12. Schlauchbruchsicherung nach einem der Ansprüche 1 bis 11, dadurch gekennzeichnet, daß der Kolben (16) durch eine Membrane ersetzt ist.

**Claims**

1. Hose fracture safety device for fluids expecially for gas installations with a valve body (5), said valve body (5) comprising a throttle channel (8) and being guided displaceably to abut a valve seat (6) in a housing (1), if a certain pressure difference ist exceeded, and further with unlatch means (13) manually operable from the outside to lift off the valve body (15) from its valve seat, <u>characterized in that</u>, upon exceeding a certain pressure difference, a release indication device (12) can be brought from its resting position into an indicating position and is held in the same, that further, for this purpose, the release indication device (12), the piston (16) is arranged axially aligned with the valve body (5) within the housing, that one side of the piston (16) is subjected to external pressure of the atmosphere and its other side is subjected to the operating pressure in the housing (1), that the piston (16) is connected to a push button (13) by means of a piston rod (14), said piston rod being guided in a guiding means in a sealed manner, said push button (13) constituting the release indicating device (12), said valve body (5) being able to be lifted from its valve seat (6) against the effect of the spring (9) and the effective operating pressure by means of said push button (13), and wherein the space (27) between the piston (16) and the guiding means (15) is subjected to the working pressure of the hose connector (11) via a connecting channel (26), and that the side of the piston (16) facing the valve body (5) is connected to the atmosphere via an axial channel (13) through the piston (16) and the piston rod (14), and that the hose connector (4) is arranged with an angle with respect to the axis of motion of the piston (16) and of the valve body (5), or the hose connector (11) is arranged axially and the release indication device at an angle thereto.

2. Hose fracture safety device as defined in claim 1, wherein the release indicating device (12) is held in its indicating position by a spring (17) in force-operated manner.

3. Hose fracture safety device as defined in claim 1 or 2, wherein the releasing indicating means (12) is held in its resting position by the higher operation pressure in the housing (1) and the lower external pressure against the effect of a spring (17) cooperating with it.

4. Hose fracture safety device as defined in claim 1, wherein a guiding means is provided by a guiding screw sealingly inserted into the housing (1).

5. Hose fracture safety device as defined in claim 1 and 2, wherein the spring (17) is arranged between the guiding means (guiding screw 15) and the push button (13).

6. Hose fracture safety device as defined in claim 1, wherein the push button (13) is bowl-shaped and its cylindircal side wall covered with a well visible warning color, in its resting position, is covered by the housing (1), and, in its indicating position, is visibly protruding from the housing (1).

7. Hose fracture safety device as defined in one of claims 1 to 6, wherein between the piston (16) and the valve body (5) a pressure bolt (20) is provided, which is axially shiftable in the housing and which is guided in a sealed manner.

8. Hose fracture safety device as defined in claim 7, wherein the pressure bolt (20) is shiftable against a spring (22) abulting at the valve seat (6) for lifting off the valve body (5) from its valve seat (6) by means of the piston (16) and the push button (13).

9. Hose fracture safety device as defined in claim 8, wherein the stroke of the pressure bolt (20) is limited by a rim (21), on which the spring abuts.

10. Hose fracture safety device as defined in claim 8 and 9, wherein the pressure bolt (20) is axially shiftable in a further guiding screw (19) arranged within the housing (1).

11. Hose fracture safety device as defined in claims 1 to 10, wherein the housing (1) comprises a boring (4) with multiple steps for the push button (13), the guiding screw (15), the piston (16) and the further guiding screw (19).

12. Hose fracture safety device as defined in one of claims 1 to 11, wherein the piston (16) is substituted by diaphragm.

## Revendications

1. Dispositif de sécurité contre la rupture de tuyaux souples pour fluides en particulier pour installations de gaz avec un corps de soupape (5) pouvant coulisser dans une gaine (1) contre l'action d'un ressort (9), lors du dépassement d'une différence de pression déterminée, contre un siège de soupape (6), et présentant un canal de passage (8) et avec un déblocage (13) actionnable à la main de l'extérieur pour soulever le corps de soupape (5) de son siège de soupape (6), caracterisé en ce que lors du dépassement de la différence de pression déterminée, le corps de soupape (5) permet de déplacer un indicateur de déclenchement (12) de sa position de repos dans sa position indicatrice et de le maintenir dans cette position, qu'à cet effet, l'indicateur de déclenchement (12), le piston (16) avec le corps de soupape (5) sont disposés dans la gaine (1) en alignement axial, que l'une des faces du piston (16) est soumise à l'action de la pression extérieure atmosphérique et que son autre face est soumise à la pression de travail dans la gaine (1), que le piston (16) est relié à travers une tige de piston (14) coulissant de façon étanche dans une glissière avec un poussoir (13) agissant sur l'indicateur de déclenchement (12), au moyen de quoi, contre l'action du ressort (9) et contre la pression de travail existante, le corps de soupape (5) peut être soulevé de son siège de soupape (6), l'espace (27) entre le piston (16) et la glissière (15) étant soumise à l'action de la pression de travail du raccord de tuyaux (11) à travers un canal de raccordement (26) et la face du piston (16) tournée vers le corps de soupape (5) est reliée à l'atmosphère à travers un canal axial (23), à travers le piston (16) et la tige de piston (14) et que le raccord de tuyaux (11) est disposé en formant un angle avec l'axe de déplacement du piston (16) et le corps de soupape (5), ou le raccord de tuyaux (11) est disposé actuellement et l'indicateur de déclenchement (12) est disposé en formant un angle.

2. Dispositif de sécurité selon la revendication 1 caractérisé en ce que l'indicateur de déclenchement (12) est maintenu par un ressort (17) par liaison mécanique dans sa position indicatrice.

3. Dispositif de sécurité selon la revendication 1 ou 2, caractérisé en ce que l'indicateur de déclenchement (12) est maintenu dans la gaine (1) au moyen de la pression de travail supérieure et dans sa position de repos, au moyen de la pression extérieure inférieure, contre l'action du ressort (17) cooperant avec lui.

4. Dispositif de sécurité selon la revendication 1, caractérisé en ce que la glissière est constituée par une vis de guidage (15) disposée de façon étanche dans la gaine (1).

5. Dispositif de sécurité selon les revendications 1 et 2, caractérisé en ce que le ressort (17) est disposé entre la glissière (vis de guidage (15))et le poussoir (13).

6. Dispositif de sécurité selon la revendication 11, caractérisé en ce que le poussoir (13) est constitué en forme de bouton et que sa paroi latérale cylindrique portant une couleur visible est, dans la position de repos, recouverte par la gaine (1) et, dans sa position indicatrice, dépasse de la gaine (1) et est visible.

7. Dispositif de sécurité selon l'une des revendications 1 à 6, caractérisé en ce que le piston (16) et le corps de soupape (5), il est prévu un bouton de pression (20) pouvant coulisser axialement dans la gaine mais de façon étanche.

8. Dispositif de sécurité selon la revendication 7, caractérisé en ce que le bouton de pression (20) peut coulisser l'action d'un ressort (22) s'appuyant sur le siège de soupape (6) pour soulever le corps de soupape (5) de son siège de soupape (6) à travers le piston (16) et le poussoir (13).

9. Dispositif de sécurité selon la revendication 8, caractérisé en ce que la course du bouton de pression (20) est limitée par une butée (21) contre laquelle s'appuie le ressort (22).

10. Dispositif de sécurité selon les revendications 8 et 9, caractérisé en ce que le bouton de pression (20) peut coulisser axialement dans une autre vis de guidage (19) disposée dans la gaine (1).

11. Dispositif de sécurité selon l'une des revendications 1 à 10, caractérisé en ce que dans la gaine (1), il est prévu un orifice (4) avec des gradins pour le poussoir (13), la vis de guidage (15), le piston (16) et l'autre vis de guidage (19).

12. Dispositif dé sécurité selon l'une des revendications 1 à 11, caractérisé en ce que le piston (16) est remplacé par une membrane.

0 090 941

1